# EUROPEAN PATENT SPECIFICATION

(11) **EP 0 838 284 B1**
(45) Date of publication and mention of the grant of the patent: **14.05.2003**
(21) Application number: 97308096.3
(22) Date of filing: 13.10.1997
(51) Int. Cl.: B21J 15/32, B25B 23/04

(54) **Fastening device for applying fastening elements to a structure**
Vorrichtung zum Setzen von Befestigungselementen auf einer Struktur
Dispositif d'application d'éléments de fixation sur une structure

(30) Priority: 22.10.1996 DE 19643656
(43) Date of publication of application: 29.04.1998
(73) Proprietor: Newfrey LLC, Newark, Delaware 19711 (US)
(72) Inventor: Walldorf, Hugo, 35394 Giessen-Rodgen (DE); Eisenhardt, Daniel, 65520 Bad Camberg (DE)
(74) Representative: Haar, Lucas Heinz Jörn

(56) References cited:
- EP-A- 0 131 851
- WO-A-84/04710
- DE-A- 19 609 456
- US-A- 2 943 652
- US-A- 4 404 877
- US-A- 4 478 112
- US-A- 5 144 870

## Description

The present invention relates to a fastening device for applying fastening elements to a structure, to a device for providing a magazine equipped with fastening elements and to a process for supplying a fastening device.

Fastening elements, in particular of plastics material, have a broad field of application. For example, plastics fastening elements are used for fastening parts or components of motor vehicles on the body of a motor vehicle. Fastening elements can be of various designs. A fastening element is fastened or applied to a structure by means of a jointing tool. The jointing tool can be supplied with individual fastening elements. Such a supply is relatively expensive, so fastening elements which are connected to one another in the manner of a belt have been proposed in EP 0 506 307 Al to simplify the handling of the fastening elements. The individual fastening elements are linked to one another in the correct position. The connection between the fastening elements to form a belt is produced by guide elements guided and held together at the sides by monofilaments. A belt of this type is produced using a mould, in a single stage of manufacture. Problems in sorting fastening elements and feeding them to the jointing tool are eliminated with such a belt. The flexible fastening element belt is wound onto a drum and transferred to a jointing tool for processing. Owing to the guide elements which are identical and therefore standardised for different fastening elements, the advance is clocked precisely and exact positioning of the fastening element thus achieved. The fastening element is separated from the belt in the jointing tool and applied to a structure. The guide elements and monofilaments are collected and fed to a recycling process.

With known jointing tools, stationary devices are used to apply fastening elements to a structure. The advantage of these stationary devices is that relatively large quantities of fastening elements can be stored in the drum. However, known devices can only be used if the structure can be brought to the device. With relatively complicated structures, therefore, the structure has to be appropriately handled for the application of individual fastening elements which are not to lie in a plane. Such handling of the structure is not always possible, as in the case of a motor vehicle body, for example. The known device also has limitations in the fastening of fastening elements in the interior of a structure.

A fitting arrangement for applying a spring nut to a fastening peg projecting from a buffer rail is known from DE 27 37 602 A1. The fitting arrangement has a pistol-like housing. A working unit comprising a plunger actuated by compressed air for depressing the spring nut is arranged in the housing. The spring nuts are brought into a fitting position through a feed duct extending substantially perpendicularly to the direction of movement of the plunger. The feed duct is connected to a flat drum which acts as a magazine for the spring nuts. A coil of spring nuts is arranged in the flat drum.

A fitting arrangement for the application of nails is known from DE 36 06 901. The fitting arrangement comprises a mouth part in which a movable piston is arranged. A radial duct substantially formed by a hollow profile is formed in a mouth orifice in which the piston is movable. Several nails connected to one another by guide bushes are arranged in the hollow profile.

DE 28 29 566 also discloses a device for applying fastening elements to a structure with a magazine for receiving fastening elements connected in the manner of a belt. The arrangement comprises a conveyor unit which conveys each fastening element into a predetermined fitting position. The device also comprises an automatically operating working unit with a rectilinearly reciprocating tool by means of which a fastening element can be applied from the fitting position onto a structure. The working unit is actuated by means of an actuating arrangement.

The magazine is designed in the form of a container or a bush. The fastening elements are firstly rolled and arranged in the magazine designed in the manner of a bush, for which purpose a press-fit lid has to be removed from the bush body. The roll with a proportion of the fastening elements can then be inserted through an inlet orifice.

Owing to the shape of the magazine and its position relative to the housing of the arrangement, handling of the arrangement is relatively complicated as the arrangement is relatively bulky in design.

A fastening device according to the pre-characterising portion of claim 1 is also disclosed by WO 84/04710. This device comprises a guide tube for leading a tape to bring fasteners in sequence into a delivery passage, and an oscillatable actuator which is moved to a retracted position by an advancing plunger and is automatically returned to an advaced position, when the plunger retracts. Fastener engaging means on the oscillatable actuator act, with each retraction and advace of the actuator, to engage a fastener and move it towards the delivery passage from which the leading fastener is driven by an advancing punch, which penetrating the tape holds the tape against movement, while the actuator is moved to its retracted position.

It is an object of the present invention to provide a fastening device for the application of fastening elements to a structure, which is easy to handle. It is a further object of the present invention to develop the fastening device with a conveying arrangement so as to allow safe, reliable conveyance of fastening means. It is a further object of the present invention to provide a device which allows the simple and rapid supply of an arrangement for the application of fastening elements with fastening elements.

The present invention provides a fastening device for applying fastening elements to a structure, the fastening device comprising a magazine for receiving a predeterminable number of fastening elements connected in the manner of a belt, an automatically acting working unit with a tool which reciprocates rectilinearly by means of which a fastening element can be applied from the fitting position to the structure, an actuating arrangement for actuating the working unit, and a conveyor arrangement for conveying each fastening element into a predetermined fitting position and comprising an actuating arrangement for the sequential pivoting of an advance unit round an axis perpendicular to the direction of movement of the tool, wherein the advance unit has, on an imaginary circumference of a circle , projections which extend substantially parallel to the axis. According to the invention the conveyor arrangement comprises:
a carrier element which reciprocates rectilinearly in a plane located substantially perpendicularly to the projections;
an advance element which is connected to the carrier element and comprises a catch with an end face for resting on a projection when the advance element pushes the projection forward and with a sliding face preceding the end face for contact on and sliding through beneath a projection when the advance element is moved to the starting position, the advance element being pivotal against a spring force round a pivot axis formed at a distance from the catch and extending substantially perpendicularly to the axis; and
an actuating unit connected to the carrier element.
The carrier element is preferably movable between two end positions. In its first end position, the catch rests with its end face on at least one longitudinal portion of a projection. Owing to a rectilinear movement of the carrier element, the catch exerts on the projection a force by means of which the advance unit is pivoted round a predetermined pivot angle. The width of the end face of the catch is dimensioned such that the catch invariably rests on the projection throughout the movement. Owing to the pivoting of the advance unit, a projection which follows the advanced projection as viewed in the pivoting direction passes into the region of engagement of the advance element. During a movement of the carrier element into its starting position, the carrier element is guided with the advance element through the region of engagement. To ensure that the end face of the catch of the advance element can be brought to rest on at least one longitudinal portion of the projection now located in the region of engagement, the advance element is pivotal in the design of the fastening device according to the invention. During a return movement of the carrier element, the projection located in the region of engagement exerts on the advance element a force by means of which the advance element is guided beneath the projection located in the region of engagement. During this procedure, the advance element slides with its sliding face along the projection. If the carrier element is located in a starting position, the advance element is pivoted by a spring force in a direction substantially parallel to the longitudinal extension of the projection to the advance unit. The advance element has adopted the position in which the catch can be brought to rest with its end face on at least one longitudinal portion of the projection located in the region of engagement.

According to a further advantageous idea, the magazine extends substantially parallel to the direction of movement of the tool. The arrangement of the magazine simplifies handling of the device as it no longer has a bulky magazine projecting from the device. The device is preferably designed in the manner of a pistol. With such a device, the magazine extends substantially parallel to the "pistol run".

The magazine preferably receives a number of fastening elements corresponding to the number of fastening elements to be applied to the structure. Owing to this proposal, the device which is designed in the manner of a pistol does not have to be reloaded during application of the fastening elements to a structure. For example, the operator can apply to a motor vehicle body a number of fastening clips adapted to the next workpiece to be processed, without the need for reloading. This advantageous embodiment of the device allows work which is not tiring as the weight of the device with the magazine and the fastening elements is reduced to a minimum. This also has an advantage with respect to handling as the magazine does not excessively increase the external dimensions of the device.

To simplify handling of the device, it is proposed that the magazine be detachably connectable to a magazine holder. The magazines equipped with fastening elements are provided separately, making laborious supply of the magazine by the operator unnecessary. For simple, rapid removal and application of a magazine on the magazine holder, it is proposed that the magazine be non-positively and/or positively connectable to the magazine holder. The non-positive and/or positive connection of the magazine to the magazine holder is preferably produced by an interlocking connection. Bayonet-type connections between the magazine and the magazine holder are also appropriate.
During the process of fastening a fastening element to a structure, it may happen that the fastening element has not been applied properly to the structure. It is necessary to reapply the fastening element to the structure after removing the fastening element. To allow easy reloading of the magazine with fastening elements without having to interrupt the operating process, a magazine comprising a receiving duct open at both ends is proposed. For this purpose, the magazine preferably has a substantially C-shaped cross section.

In order to connect the fastening elements, which are connected to one another in the manner of a belt, to the magazine in a captive manner, it is proposed that the end region of the receiving duct remote from the fitting position have at least one interlocking cam which secures the belt in the magazine.

For the precise positioning of a fastening element in the fitting position, the device preferably has at least one stop against which the fastening element strikes once it has reached the fitting position. The individual fastening elements can be advanced to the fitting position by means of a manually actuable conveyor arrangement. Automatic, sequential conveyance is proposed to increase the efficiency of the arrangement according to the invention. The individual fastening elements are conveyed in succession to the fitting position once it has become free. The conveyor arrangement is not activated until the fastening process has ended.

According to a further advantageous idea, a device is proposed in which the magazine is pivotal round an axis extending substantially parallel to the conveyor arrangement of the fastening elements. The magazine is preferably smoothly pivotal with or without the magazine holder. The pivot angle can be up to 250°. The pivotability allows inaccessible regions of a structure also to be provided with fastening elements.

According to a further advantageous idea it is proposed that the advance unit be substantially disc-shaped in design. Engagement means which can be brought into engagement with a fastening element are provided on the outer periphery of the advance unit.

The design of the advance unit in which the projections have a circular cross section is preferred. This design of the projections has the advantage that, during the advancing operation, the projections are not subjected to irregular frictional wear caused by the superimposition of the rectilinear movement of the carrier element and of the advance element and the arcuate movement of the projection.

A design of the fastening device in which the projections are arranged equidistantly from one another is preferred. Such an arrangement of the projections is appropriate when the distance between the fastening elements to be conveyed is identical. This is the case, in particular, when the fastening elements are connected to one another in the manner of a belt. The distance between the individual projections is to be adapted to the distance between the fastening elements in a magazine.

According to a further advantageous idea it is proposed that the projections all be identical in design. This simplifies the fitting of a fastening device. It is beneficial for the production of a fastening device if the projections are formed integrally with the advance unit. The advance unit can be formed integrally with the projections if they are produced from plastics material, preferably in one stage of production.

The fastening device has a housing. It is advantageous if a recess in which the carrier element is guided in a sliding manner is formed at least in one housing part. According to a further advantageous design, it is proposed that at least one housing part have a substantially arcuate groove in which the projections engage, the groove opening into the recess in which the carrier element is slidably guided. Owing to the design of an arcuate groove in the housing part, a separate shaft for the advance unit is unnecessary. A further advantage of this design is that the projections guided in the arcuate groove absorb the forces during the advancing operation. The distribution of forces is uniform with an equidistant configuration of the projections.

To allow effective, reliable movement of the advance unit, it is proposed that the groove have a cross section substantially corresponding to the internal cross section of the projections. Between the lateral walls of the groove and the projections, there should be a certain amount of play which, on the one hand, does not cause high frictional forces between the groove walls and the projections and, on the other hand, the cross section of the groove should not be so large that the advance unit is not guided accurately enough which might prevent the advance unit from grasping a fastening element to be conveyed.

As already mentioned hereinbefore, the advance element is pivotal against a spring force. The advance element is preferably pivoted against the spring force of a compression spring, in particular a helical compression spring or spring washer. The advantage of a compression spring is that when a spring winding breaks, the operability of the fastening device is restricted but not completely destroyed. The compression spring is advantageously arranged between the advance element and the carrier element. In particular, the compression spring can be arranged beneath the catch of the advance element. Alternatively, it is proposed that the compression spring be arranged substantially parallel to the extension of the advance element and that the advance element have a plate which is formed substantially perpendicularly to its longitudinal extension and rests on the compression spring. The compression spring preferably projects partially into a bore formed in the carrier element. A design of this type has the advantage that the carrier element can be preassembled with the compression spring and the advance element as a unit. This also simplifies repair of a fastening device.

According to a further advantageous design of the fastening device it is proposed that the carrier element have a forward blocking member which is arranged such that it engages, preferably directly, in front of a projection, as viewed in the conveying direction, in a rest position of the carrier element. This design of the fastening device ensures that, with external influence on the advance unit, a fastening element can be pressed manually in the conveying direction and the advance unit is blocked in this direction.

Blocking of the advance unit in the opposite direction can be achieved in that the carrier element has a backward blocking member arranged such that it engages behind a projection, preferably directly, as viewed in the conveying direction at least in a rest position of the carrier element. Blockage of the advance unit for forward as well as backward movement of the advance unit is achieved in that an integrally formed barrier member is formed with the carrier element. For this purpose, the carrier element has a corresponding recess into which a projection can be brought, the projection passing from here via a passage into the region of engagement. A carrier element is preferably formed from a plastics material.

To achieve the reciprocating movement of the carrier element, it is proposed that the carrier element be connected to a pneumatically operating piston cylinder unit, preferably with spring return.

The fastening device according to the invention has a controller for sequence control of the fastening arrangement. The controller is connected to the conveyor arrangement and to the actuating arrangement. The controller is preferably connected to a trip key. Sequence control of the fastening device is tripped by the trip key. According to a preferred embodiment of the fastening arrangement, the fastening arrangement comprises a safety arrangement by means of which actuation of the working unit is released only when the safety arrangement has adopted a predetermined state. Advance or conveyance of a fastening means into the operating position can be effected by the trip key. However, if the safety arrangement has not adopted a predetermined switch state, the working unit is not activated even during further or repeated actuation of the trip key. The safety arrangement is preferably designed such that it adopts a predetermined switch state only when the fastening device with the fastening element is pressed against a structure.

Further advantages and features of the invention will be described with reference to the drawings, in which
Figure 1 is a front view of a pistol-like fastening device.
Figure 2 is a side view from the left of the device according to Figure 1.
Figure 3 is a plan view of the device according to Figure 1.
Figure 4 is a perspective view from the left of the device according to Figure 1.
Figure 5 is a perspective view from the top right of the device according to Figure 1.
Figure 6 shows the device according to Figure 1 with a pivoted magazine and magazine holder in a front view.
Figure 7 is a side view from the left of the device according to Figure 6.
Figure 8 is a plan view of the device according to Figure 6.
Figures 9 and 10 are perspective views of the device according to Figure 6.
Figure 11 shows a supply device for supplying a magazine.
Figure 12 is a perspective view of a carrier element.
Figure 13 is a solid section of the carrier element according to Figure 12.
Figure 14 shows a housing part of a fastening device with a carrier element in a first position.
Figure 15 shows the carrier element in the housing according to Figure 14 in a second position.
Figure 16 is a schematic view of a fastening with a conveyor arrangement in a first position.
Figure 17 shows the fastening device according to Figure 16 with the conveyor arrangement in a second position.

The device 1 for the application of fastening elements 2 comprises a magazine 3 for receiving fastening elements 2 connected to one another in the manner of a belt. The fastening elements 2 are connected to one another by webs 4. The belt-like connection of the fastening elements to one another preferably corresponds to a belt with fastening elements of the type known from EP 0 506 307 and included in the content of this patent application.

A predetermined number of fastening elements 2 is stored in the magazine 3. The magazine 3 is substantially elongate in design. It extends substantially parallel to the direction of movement of a tool not shown. The magazine 3 has a receiving duct which is open at both ends. The cross section of the receiving duct is substantially C-shaped in design.

The device 1 has a pistol-like housing-5 with a handle 6 and a body 7 formed substantially transversely to the handle 6. The handle 6 is connected to supply arrangements via lines 8, 9. The device is supplied with electricity via line 8, for example, whereas line 9 is a pneumatic line.

A head 10 is formed at the front end of the body 7. The head 10 comprises a conveyor arrangement. The advance units comprise a manually actuable handwheel 11 which drives two advance units 12, 13 via a shaft. The advance units 12, 13 can obviously also be driven, for example, by an electric motor instead of a manually actuated handwheel 11. The conveying arrangement conveys a fastening element 2 into a fitting position designated by 14. A fastening element 2 has reached the fitting position when it strikes a stop 15.

Two collecting chambers 16, 17 in which the webs 4 are collected are provided beneath the head 10 and are connected thereto.

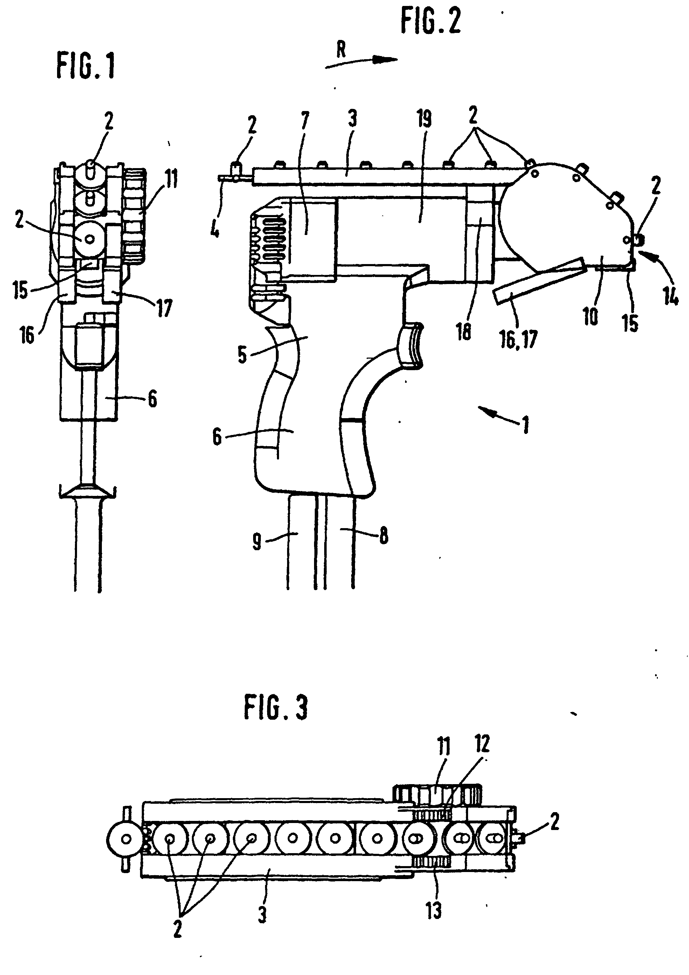

As shown in particular in Figure 3, the magazine 3 has a C-shaped cross section. The magazine 3 is non-positively and positively connected to a magazine holder 19 via two plates.

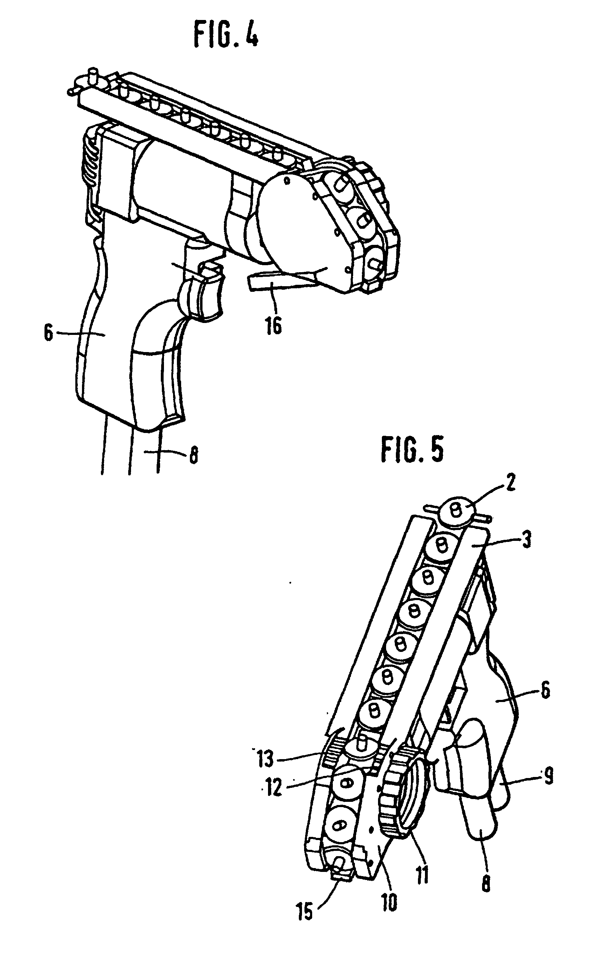

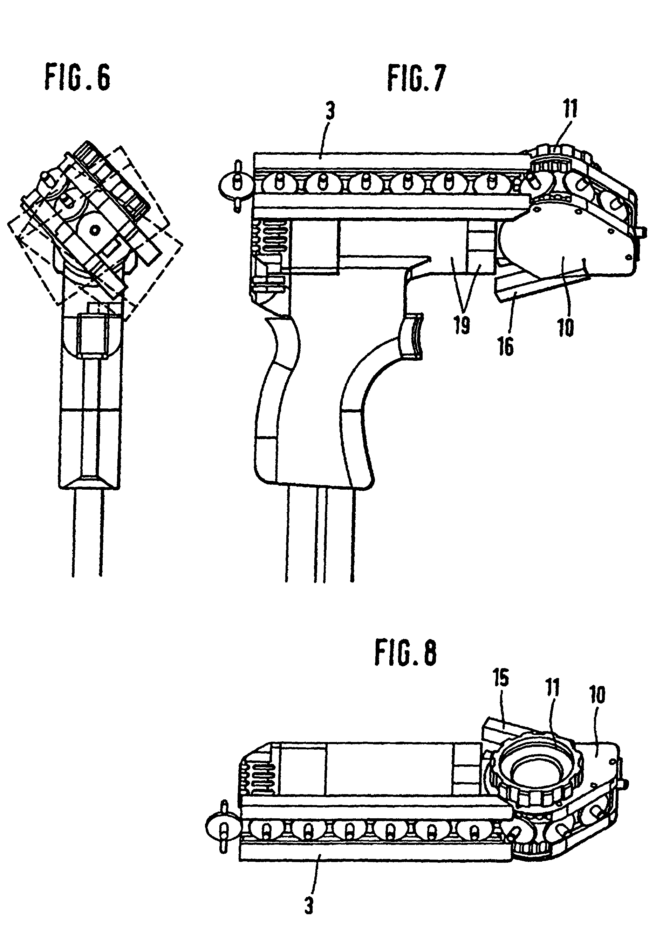

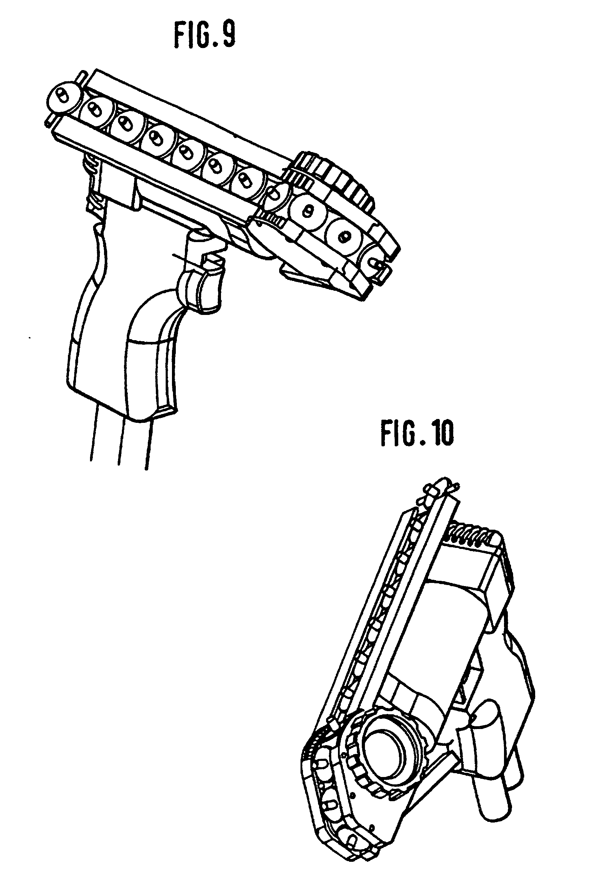

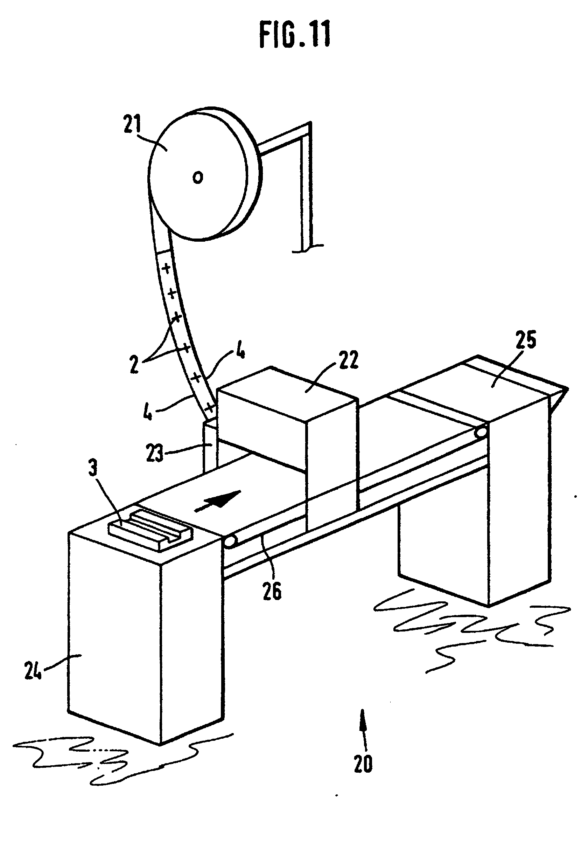

The magazine holder 19 is pivotal with the magazine 3 round an axis extending substantially parallel to the conveying direction R. The pivotability of the magazine and of the magazine holder covers an angle of up to 250. The head 10 is pivotal simultaneously with the magazine 3. Figure 11 shows a device 20 for providing a magazine 3 supplied with fastening elements 2, in particular a magazine for an arrangement of the type shown in Figures 1 to 10. Fastening elements 2 connected to one another in the manner of a belt are stored in a storage container 21. The device comprises a workstation 22 to which the fastening elements connected to one another in the manner of a belt are fed. The fastening elements are fed by means of a first conveyor arrangement 23.

The apparatus 20 comprises a magazine feed station 24 and a magazine removal station 25. A second conveyor arrangement 26 conveys a respective magazine 3 from the magazine feed station 24 to the workstation 22. The magazine is positioned in a predetermined location in the workstation 22. The first arrangement 23 is then activated so a predetermined number of fastening elements is introduced into the magazine. The webs 4 are then severed and the supplied magazine 3 conveyed to the magazine removal station 25 by means of the second arrangement 26. Already supplied magazines 3 are ready for further use in the magazine removal station 25.

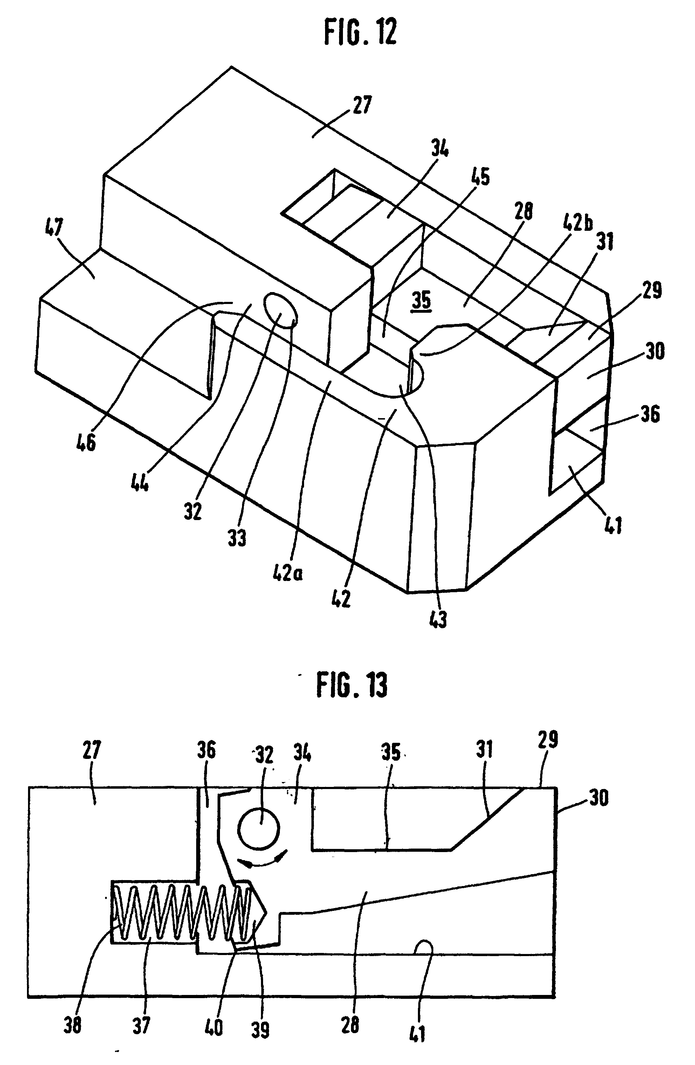

Figure 12 is a perspective view of a carrier element 27. The carrier element 27 is substantially cuboid in design. The carrier element 27 is preferably produced from a plastics material. The carrier element 27 comprises an advance element 28. The advance element 28 comprises a catch 29 at one free end. The catch 29 has an end face 30 which is to rest on at least one longitudinal portion of a projection, as described in detail hereinafter. The end face 30 is preceded by a sliding face 31. The sliding face 31 has a substantially oblique course. A pivot 32 round which the advance element 28 can pivot is formed on the end region remote from the catch 30. The pivot axis 32 is formed by a stud which is mounted on the carrier element 27. For this purpose, the carrier 27 has a bore 33. The stud forming the pivot 32 engages in a stud holder 34 of the advance element 28. A substantially plane portion 35 is formed between the stud holder 34 and the catch 29. The advance element 28 is arranged in a socket 36 formed in the carrier element 27. The cross-sectional geometry of the socket 36 substantially corresponds to the cross section of the advance element 28 in a longitudinal plane. The height of the socket 36 is greater than the height of the advance element 28, in particular greater than the height of the catch 29, as shown in particular in Figure 13.

The advance element 28 is pivotal round the pivot axis 32 against a spring force. The advance element 28 is pivotal against the spring force of a compression spring 38 in the embodiment shown in Figure 13. The compression spring 38 is arranged between the carrier element 27 and the advance element 28. The carrier element 27 has a receiving bore 37 which extends substantially parallel to the longitudinal extension of the advance element 28 and penetrates the holder element 27 from the socket 36. A helical compression spring 38 penetrates into the receiving bore 37. The other end portion of the compression spring 38 penetrates into a receiving bore 39 formed on the advance element 28. The compression spring 38 can be arranged in the receiving bores 37, 39 with or without initial tension. If the spring is to be arranged with initial tension, it is proposed that the region of the advance element 28 provided beneath the receiving bore 39 be designed as a stop which comes to rest with the base 41 of the socket 36 in order thus to prevent the advance element 28 of the carrier element 27 from pivoting out excessively. The portion of the advance element 28 remote from the region 40 should preferably be curved to allow the advance element 28 to pivot into the socket 36 of the carrier element 27.

The carrier element 27 has a forward and backward blocking member formed integrally with the carrier element 27. The backward blocking member 42a is designed in the - form of an elongate plate extending substantially parallel to the advance element 28. The forward blocking member 42b forms with the backward blocking member 42a a projection socket 43 in which a projection partially penetrates. A duct 44 which opens via an orifice 45 into the elongate portion 35 of the advance element 28 is formed between the backward blocking member 42a and the body of the carrier element 27. The duct 44 has an inlet orifice 46 and a bottom 47.

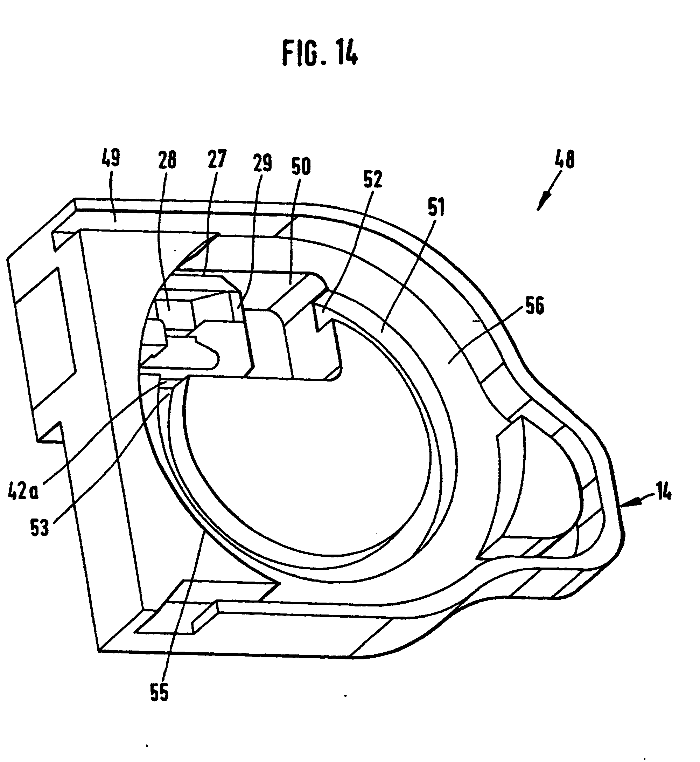

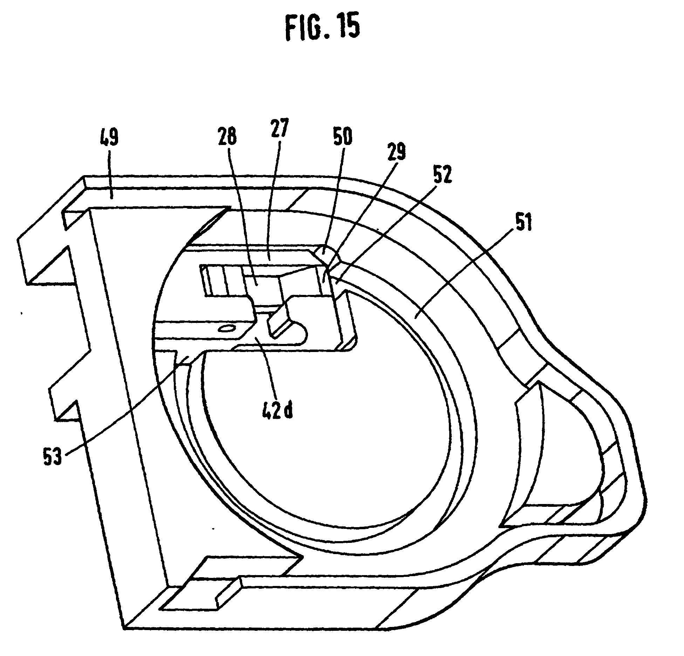

The advance element 28 shown in Figures 12 and 13 is shown in connection with a housing part 48 in Figures 14 and 15. The housing part 48 is part of a housing of the fastening device as shown, for example, in Figures 1 to 11. The housing part 48 has a guide duct 49 through which fastening elements are guided into an operating position 14, as shown, for example, in Figure 2. The housing part 48 has a recess 50 in which the carrier element 27 is guided in a sliding manner. As shown in Figure 14, the housing part 48 has a substantially arcuate groove 51 which opens into the recess 50. One aperture 52 of the groove 51 is positioned such that it rests opposite the catch 29 of the advance element 28.

The carrier element 27 is shown in an end position in Figure 14. In this end position, the backward blocking member 42a blocks the second aperture 53 of the groove 51. If the carrier element 27 is displaced in the recess 50 by an actuating unit which is not shown but is preferably a pneumatically operating piston/cylinder unit, in particular with spring return, linearly to the first aperture 52 of the groove 51, the carrier element 27 adopts the position in the recess 50 shown in Figure 15. In this position, which is a second end position of the carrier element 27, the catch 29 is placed directly in front of the aperture 52 of the groove 51. In this end position, the second aperture 53 of the groove 51 is cleared by the backward blocking member 42a.

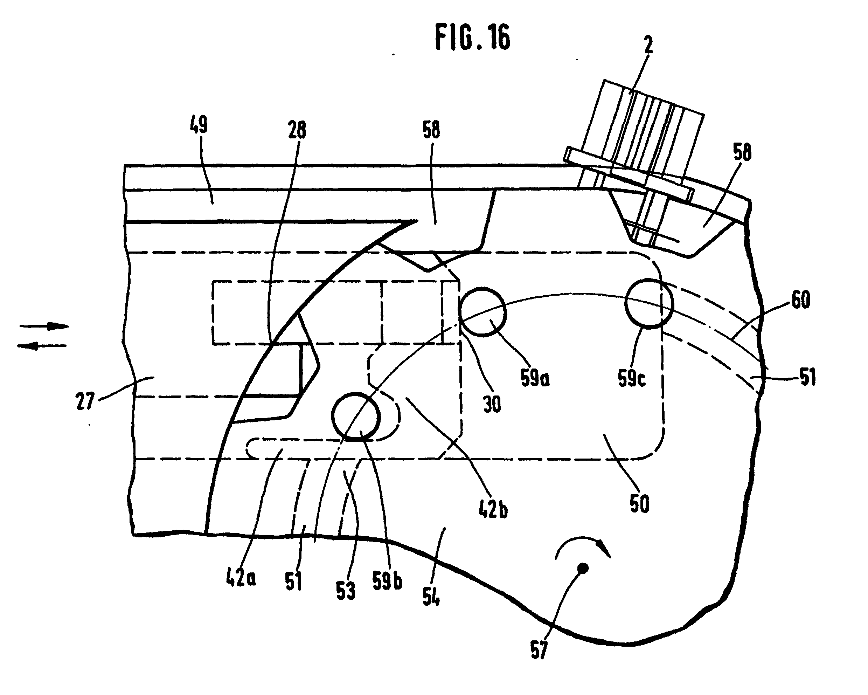

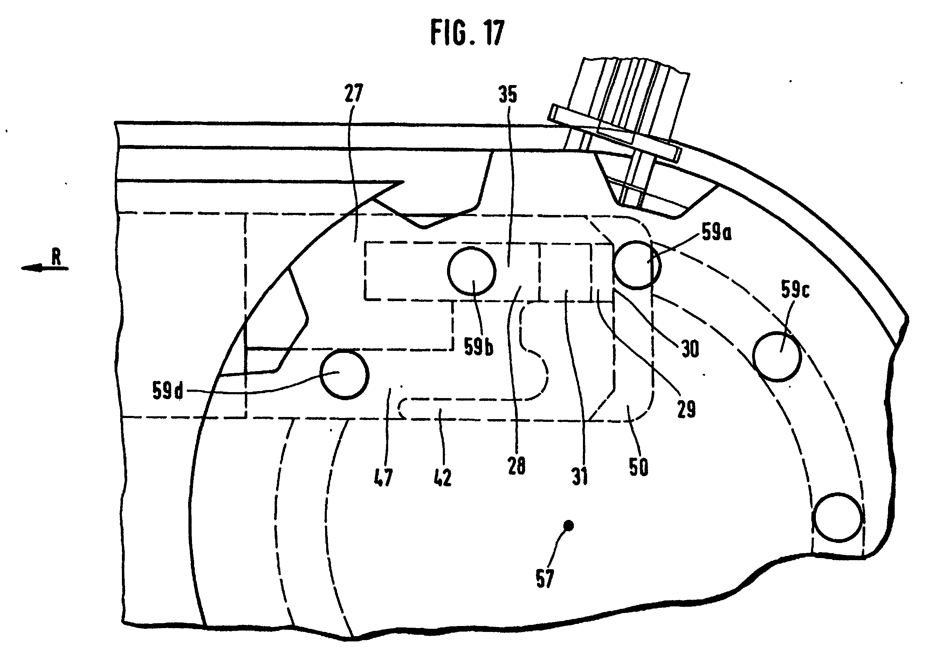

We will now refer to the illustrations in Figures 16 and 17. Figure 16 shows a housing part 48 with a carrier element 27 which substantially corresponds to Figure 14. Figure 16 additionally shows an advance unit 54 located in the feed socket limited by the wall 55. The advance unit 54, which is preferably a substantially circular disc, is sequentially pivotal round an axis 57. Drivers 58 which serve to drive a fastening element 2 are provided on the outer periphery of the advance unit 54.

The advance unit 54 has projections 59 arranged over an imaginary circumference of a circle 60. The projections 59 are pin-like configurations with a circular cross section. The diameter of the projections 59 substantially corresponds to the width of the groove 51. The number of projections 59 preferably corresponds to the number of drivers 58. The drivers 58 and the projections 59 are preferably radially aligned. As shown in Figures 16 and 17, the projections 59 and the drivers 58 are formed equidistantly from one another.

The carrier element 27 is shown in one end position in Figure 16. The end face 30 of the advance element 28 rests on a free end portion of the projection 59a. The projection 59b is arranged between the forward blocking member 42b and the backward blocking member 42a. The advance element 28 pushes the projection 59a forward by a rectilinear movement of the carrier element 27 so the advance unit 54 is pivoted round the axis 57. A fastening element 2 is conveyed in the conveying direction by the drivers 58 of the advance unit 54 owing to the pivoting of the advance unit 54. The further projections 59b and 59c are pivoted simultaneously. Figure 17 shows the second end position of the carrier element 27. Owing to the advancing movement, the projection 59a as shown in Figure 17 has adopted the position of the projection 59c according to Figure 16. The projection 59b in Figure 17 is located in the same position as the projection 59a before the advancing movement, as shown in Figure 16. The projection 59b is located above the elongate portion 35 of the advancing element 28. During a movement of the carrier element 27 into its starting position, as shown in Figure 16, the advancing unit 54 remains stationary. During the movement of the carrier element 27 in the direction designated by the arrow R to the starting position, the element 28 with its sliding face 31 slides through beneath the projection 59b. The advance element 28 is simultaneously pressed in the direction of the axis 57 into the socket 36 of the carrier element 27 against a spring force. The backward blocking member 42a engages behind the projection 59d. The displacement path of the carrier element 27 is dimensioned such that the end face 30 is located behind or on the surface of the projection 59b when the carrier element 27 has reached its starting position shown in Figure 16. A new advancing operation can take place.

## Claims

1. Fastening device (1) for applying fastening elements (2) to a structure, the fastening device (1) comprising:
a magazine (3) for receiving a predeterminable number of fastening elements (2) connected in the manner of a belt;
an automatically acting working unit with a tool which reciprocates rectilinearly by means of which a fastening element (2) can be applied from a predetermined fitting position (14) to the structure;
an actuating arrangement for actuating the working unit; and
a conveyor arrangement for conveying each fastening element (2) into the fitting position (14) and comprising an actuating arrangement for the sequential pivoting of an advance unit (54) round an axis (57) perpendicular to the direction of movement of the tool, wherein the advance unit (54) has, on an imaginary circumference of a circle (60), projections (59a, 59b, 59c, 59d) which extend substantially parallel to the axis (57);
**characterised in that** the conveyor arrangement comprises:
a carrier element (27) which reciprocates rectilinearly in a plane located substantially perpendicularly to the projections (59a, 59b, 59c, 59d);
an advance element (28) which is connected to the carrier element (27) and comprises a catch (29) with an end face (30) for resting on a projection (59a, 59b, 59c, 59d) when the advance element (28) pushes the projection (59a, 59b, 59c, 59d) forward and with a sliding face (31) preceding the end face (30) for sliding through beneath a projection (59a, 59b, 59c, 59d) when the advance element (28) is moved to the starting position, the advance element (28) being pivotal against a spring force round a pivot axis (32) formed at a distance from the catch (29) and extending substantially perpendicularly to the axis (57); and
an actuating unit connected to the carrier element (27).

2. Fastening device as claimed in claim 1, wherein the advance unit (54) is substantially disc-shaped in design.

3. Fastening device as claimed in either one of claims 1 or 2, wherein the projections (59a, 59b, 59c, 59d) have a circular cross section.

4. Fastening device as claimed in either one of claims 1 to 3, wherein the projections (59a, 59b, 59c, 59d) are arranged equidistantly from one another.

5. Fastening device as claimed in claim 4, wherein all projections (59a, 59b, 59c, 59d) are identical in design.

6. Fastening device as claimed in any one of claims 1 to 5, wherein the advance unit (54) is formed integrally with the projections (59a, 59b, 59c, 59d).

7. Fastening device as claimed in claim 6, wherein the integrally designed advance unit (54) with the projections (59a, 59b, 59c, 59d) is produced from a plastics material.

8. Fastening device as claimed in any one of claims 1 to 7 with a housing, wherein a recess (50) in which the carrier element (27) is slidably guided is provided in a housing part (48).

9. Fastening device as claimed in claim 8, wherein the housing part (48) has a substantially arcuate groove (51) in which the projections (59a, 59b, 59c, 59d) engage, the groove (51) opening into the recess (50).

10. Fastening device as claimed in claim 9, wherein the groove (51) has a cross section which substantially corresponds to an internal cross section of the projections (59a, 59b, 59c, 59d).

11. Fastening device as claimed in any one of claims 1 to 10, wherein the advance element (28) is pivotal against the spring force of a compression spring (38), preferably a helical compression spring.

12. Fastening device as claimed in claim 11, wherein the compression spring (38) is arranged between the advance element (28) and the carrier element (27).

13. Fastening device as claimed in claim 11, wherein the compression spring (38) is arranged beneath the catch (30) of the advance element (28).

14. Fastening device as claimed in claim 13, wherein the compression spring (38) is arranged substantially parallel to the longitudinal extension of the advance element (28), and the advance element (28) has a plate which is formed substantially perpendicularly to its longitudinal extension and rests on the compression spring (38).

15. Fastening device as claimed in claim 14, wherein the compression spring (38) penetrates partially into a receiving bore (39) formed in the carrier element (27).

16. Fastening device as claimed in any one of claims 1 to 15, wherein the carrier element (27) has a forward blocking member (42b) which is arranged such that it engages, preferably directly, in front of a projection (59b), as viewed in the conveying direction, in a rest position of the carrier element (27).

17. Fastening device as claimed in any one of claims 1 to 16, wherein the carrier element (27) has a backward blocking member (42a) which is arranged such that it engages, preferably directly, behind a projection, as viewed in the conveying direction, at least in a rest position of the carrier element (27).

18. Fastening device as claimed in claim 17, wherein the forward and backward blocking member (42) is formed integrally with the carrier element (27).

19. Fastening device as claimed in any one of claims 1 to 18, wherein the carrier element (27) is produced from a plastics material.

20. Fastening device as claimed in any one of claims 1 to 19, wherein the actuating unit is a pneumatically operating piston/cylinder unit, preferably with spring return.

21. Fastening device as claimed in any one of claims 1 to 20, wherein the the tool reciprocates rectilinearly and the magazine (3) extends substantially parallel to the direction of movement of the tool.

22. Fastening device as claimed in any one of claims 1 to 21, wherein the device is designed in the manner of a pistol.

23. Fastening device as claimed in any one of claims 1 to 22, wherein the magazine (3) receives a number of fastening elements (2) corresponding to the number of fastening elements (2) to be applied to the structure in the next processing stage.

24. Fastening device as claimed in any one of claims 1 to 23, wherein the device has a magazine holder (19) to which the magazine (3) can be detachably connected.

25. Fastening device as claimed in claim 24, wherein the magazine (3) can be connected non-positively and/or positively to the magazine holder (19).

26. Fastening device as claimed in either one of claims 24 or 25, wherein the connection is a catch connection.

27. Fastening device as claimed in any one of claims 23 to 26, wherein the magazine (3) has a receiving duct open at both its ends.

28. Fastening device as claimed in any one of claims 23 to 27, wherein the magazine (3) has a substantially C-shaped cross section.

29. Fastening device as claimed in either of claims 27 or 28, wherein the end region of the receiving duct further removed from the working position (14) has at least one interlocking cam.

30. Fastening device as claimed in any one of claims 27 to 29, wherein the end region of the receiving duct adjacent to the working position (14) has at least one interlocking cam.

31. Fastening device as claimed in any one of claims 1 to 30, wherein the arrangement (1) has at least one stop (15) which fixes the position of a fastening element (2) in the fitting position (14).

32. Fastening device as claimed in any one of claims 23 to 31 when appended to claim 1, wherein the conveyor arrangement is manually actuable.

33. Fastening device as claimed in any one of claims 23 to 32, wherein the magazine (3), in particular the magazine (3) and the conveying unit, is pivotal round an axis extending substantially parallel to the direction of movement of the tool.

34. Fastening device as claimed in either of claims 32 or 33, wherein the magazine (3) can be pivoted smoothly without or with the magazine holder (19).

35. Fastening device as claimed in either of claims 33 or 34, wherein the pivot angle is up to 250°.

36. Fastening device as claimed in claim 32, wherein the magazine (3) is pivotal with the magazine holder (19).

37. Fastening device as claimed in any one of claims 1 to 36, wherein the conveyance of each fastening element (2) into the fitting position (14) takes place automatically and sequentially once the fitting position (14) has become free.

38. Fastening device as claimed in any one of claims 1 to 37, wherein the conveyor arrangement and the actuating arrangement are connected to a controller for sequence control.

39. Fastening device as claimed in claim 38, wherein it has a trip key which is connected to the controller.

40. Fastening device as claimed in claim 39, wherein it comprises a safety arrangement by means of which actuation of the working unit is released only when the safety arrangement has adopted a predetermined switch state.

## Patentansprüche

1. Befestigungsvorrichtung (1) zum Anbringen von Befestigungselementen (2) an einer Struktur, wobei die Befestigungsvorrichtung (1) folgendes umfasst:
ein Magazin (3) zur Aufnahme einer vorbestimmbaren Anzahl gurtartig verbundener Befestigungselemente (2);
eine selbsttätig wirkende Arbeitseinheit mit einem geradlinig hin und her bewegbaren Werkzeug, durch das ein Befestigungselement (2) aus einer vorbestimmten Montageposition (14) an die Struktur anbringbar ist;
eine Betätigungseinrichtung zur Betätigung der Arbeitseinheit; und
eine Transporteinrichtung zum Transport eines jeden Befestigungselementes (2) in die Montageposition (14) und mit einer Betätigungseinrichtung zum sequentiellen Verschwenken einer Vorschubeinheit (54) um eine senkrecht zu der Bewegungsrichtung des Werkzeuges verlaufende Achse (57), wobei die Vorschubeinheit (54) auf einem gedachten Kreisumfang (60) Vorsprünge (59a, 59b, 59c, 59d) aufweist, die im wesentlichen parallel zu der Achse (57) verlaufen;
**dadurch gekennzeichnet, dass** die Transporteinrichtung umfasst:
ein in einer im wesentlichen senkrecht zu den Vorsprüngen (59a, 59b, 59c, 59d) liegenden Ebene geradlinig hin und her bewegliches Trägerelement (27);
ein mit dem Trägerelement (27) verbundenes Vorschubelement (28), das eine Raste (29) mit einer Stirnfläche (30) zur Anlage an einem Vorsprung (59a, 59b, 59c, 59d) aufweist, wenn das Vorschubelement (28) den Vorsprung (59a, 59b, 59c, 59d) vorwärts schiebt, und mit einer der Stimfläche (30) vorgeordneten Gleitfläche (31) zum Hindurchgleiten unterhalb eines Vorsprungs (59a, 59b, 59c, 59d), wenn das Vorschubelement (28) in die Ausgangsstellung bewegt wird, wobei das Vorschubelement (28) gegen eine Federkraft um eine mit Abstand zur Raste (29) ausgebildete und im wesentlichen senkrecht zu der Achse (57) verlaufende Schwenkachse (32) schwenkbar ist; und
eine mit dem Trägerelement (27) verbundene Betätigungseinheit.

2. Befestigungsvorrichtung nach Anspruch 1, wobei die Vorschubeinheit (54) im wesentlichen scheibenförmig ausgebildet ist.

3. Befestigungsvorrichtung nach Anspruch 1 oder 2, wobei die Vorsprünge (59a, 59b, 59c, 59d) einen kreisförmigen Querschnitt aufweisen.

4. Befestigungsvorrichtung nach einem der Ansprüche 1 bis 3, wobei die Vorsprünge (59a, 59b, 59c, 59d) äquidistant zueinander angeordnet sind.

5. Befestigungsvorrichtung nach Anspruch 4, wobei alle Vorsprünge (59a, 59b, 59c, 59d) gleich ausgebildet sind.

6. Befestigungsvorrichtung nach einem der Ansprüche 1 bis 5, wobei die Vorschubeinheit (54) mit den Vorsprüngen (59a, 59b, 59c, 59d) einstückig ausgebildet ist.

7. Befestigungsvorrichtung nach Anspruch 6, wobei die mit den Vorsprüngen (59a, 59b, 59c, 59d) einstückig ausgebildete Vorschubeinheit (54) aus einem Kunststoff hergestellt ist.

8. Befestigungsvorrichtung nach einem der Ansprüche 1 bis 7 mit einem Gehäuse, wobei in einem Gehäuseteil (48) eine Ausnehmung (50), in der das Trägerelement (27) gleitend geführt ist, vorgesehen ist.

9. Befestigungsvorrichtung nach Anspruch 8, wobei das Gehäuseteil (48) eine im wesentlichen kreisbogenförmige Nut (51) aufweist, in die die Vorsprünge (59a, 59b, 59c, 59d) eingreifen, wobei die Nut (51) in die Ausnehmung (50) mündet.

10. Befestigungsvorrichtung nach Anspruch 9, wobei die Nut (51) einen Querschnitt aufweist, der im wesentlichen einem lichten Querschnitt der Vorsprünge (59a, 59b, 59c, 59d) entspricht.

11. Befestigungsvorrichtung nach einem der Ansprüche 1 bis 10, wobei das Vorschubelement (28) gegen die Federkraft einer Druckfeder (38), vorzugsweise einer schraubenförmigen Druckfeder, schwenkbar ist.

12. Befestigungsvorrichtung nach Anspruch 11, wobei die Druckfeder (38) zwischen dem Vorschubelement (28) und dem Trägerelement (27) angeordnet ist.

13. Befestigungsvorrichtung nach Anspruch 11, wobei die Druckfeder (38) unterhalb der Raste (30) des Vorschubelementes (28) angeordnet ist.

14. Befestigungsvorrichtung nach Anspruch 13, wobei die Druckfeder (38) im wesentlichen parallel zur Längserstreckung des Vorschubelementes (28) angeordnet ist, und das Vorschubelement (28) eine im wesentlichen senkrecht zu seiner Längserstreckung ausgebildete Lasche aufweist, die an der Druckfeder (38) anliegt.

15. Befestigungsvorrichtung nach Anspruch 14, wobei die Druckfeder (38) teilweise in eine im Trägerelement (27) ausgebildete Aufnahmebohrung (39) hineinragt.

16. Befestigungsvorrichtung nach einem der Ansprüche 1 bis 15, wobei das Trägerelement (27) ein Vorwärtssperrorgan (42b) aufweist, das so angeordnet ist, dass es in einer Ruhestellung des Trägerelementes (27) vor einen Vorsprung (59b), in Transportrichtung betrachtet, vorzugsweise unmittelbar greift.

17. Befestigungsvorrichtung nach einem der Ansprüche 1 bis 16, wobei das Trägerelement (27) ein Rückwärtssperrorgan (42a) aufweist, das so angeordnet ist, dass es wenigstens in einer Ruhestellung des Trägerelementes (27) hinter einen Vorsprung, in Transportrichtung betrachtet, vorzugsweise unmittelbar greift.

18. Befestigungsvorrichtung nach Anspruch 17, wobei das Vorwärts- und das Rückwärtssperrorgan (42) einteilig mit dem Trägerelement (27) ausgebildet sind.

19. Befestigungsvorrichtung nach einem der Ansprüche 1 bis 18, wobei das Trägerelement (27) aus einem Kunststoff hergestellt ist.

20. Befestigungsvorrichtung nach einem der Ansprüche 1 bis 19, wobei die Betätigungseinheit eine pneumatisch arbeitende Kolben/Zylinder-Einheit, vorzugsweise mit Federrückstellung, ist.

21. Befestigungsvorrichtung nach einem der Ansprüche 1 bis 20, wobei das Werkzeug geradlinig hin und her beweglich ist und das Magazin (3) sich im wesentlichen parallel zu der Bewegungsrichtung des Werkzeuges erstreckt.

22. Befestigungsvorrichtung nach einem der Ansprüche 1 bis 21, wobei die Vorrichtung pistolenartig ausgebildet ist.

23. Befestigungsvorrichtung nach einem der Ansprüche 1 bis 22, wobei das Magazin (3) eine der Anzahl der im nächsten Bearbeitungsschritt an die Struktur anzubringenden Befestigungselemente (2) entsprechende Anzahl an Befestigungselementen (2) aufnimmt.

24. Befestigungsvorrichtung nach einem der Ansprüche 1 bis 23, wobei die Vorrichtung einen Magazinhalter (19) aufweist, mit dem das Magazin (3) lösbar verbindbar ist.

25. Befestigungsvorrichtung nach Anspruch 24, wobei das Magazin (3) kraft- und/oder formschlüssig mit dem Magazinhalter (19) verbindbar ist.

26. Befestigungsvorrichtung nach Anspruch 24 oder 25, wobei die Verbindung eine Rastverbindung ist.

27. Befestigungsvorrichtung nach einem der Ansprüche 23 bis 26, wobei das Magazin (3) einen an seinen beiden Enden offenen Aufnahmekanal aufweist.

28. Befestigungsvorrichtung nach einem der Ansprüche 23 bis 27, wobei das Magazin (3) einen im wesentlichen C-förmigen Querschnitt aufweist.

29. Befestigungsvorrichtung nach Anspruch 27 oder 28, wobei der von der Arbeitsposition (14) entferntere Endbereich des Aufnahmekanals wenigstens eine Rastnocke aufweist.

30. Befestigungsvorrichtung nach einem der Ansprüche 27 bis 29, wobei der der Arbeitsposition (14) benachbarte Endbereich des Aufnahmekanals wenigstens eine Rastnocke aufweist.

31. Befestigungsvorrichtung nach einem der Ansprüche 1 bis 30, wobei die Einrichtung (1) wenigstens einen Anschlag (15) aufweist, der die Lage eines Befestigungselementes (2) in der Montageposition (14) festlegt.

32. Befestigungsvorrichtung nach einem der Ansprüche 23 bis 31 in Verbindung mit Anspruch 1, wobei die Transporteinrichtung manuell betätigbar ist.

33. Befestigungsvorrichtung nach einem der Ansprüche 23 bis 32, wobei das Magazin (3), insbesondere das Magazin (3) und die Transporteinheit, um eine im wesentlichen parallel zu der Bewegungsrichtung des Werkzeuges verlaufende Achse verschwenkbar ist.

34. Befestigungsvorrichtung nach Anspruch 32 oder 33, wobei das Magazin (3) ohne oder mit dem Magazinhalter (19) stufenlos verschwenkbar ist.

35. Befestigungsvorrichtung nach Anspruch 33 oder 34, wobei der Verschwenkwinkel bis 250° beträgt.

36. Befestigungsvorrichtung nach Anspruch 32, wobei das Magazin (3) mit dem Magazinhalter (19) verschwenkbar ist.

37. Befestigungsvorrichtung nach einem der Ansprüche 1 bis 36, wobei der Transport eines jeden Befestigungselementes (2) in die Montageposition (14) selbsttätig und sequentiell erfolgt, wenn die Montageposition (14) frei geworden ist.

38. Befestigungsvorrichtung nach einem der Ansprüche 1 bis 37, wobei die Transporteinrichtung und die Betätigungseinrichtung mit einer Steuereinrichtung zur Ablaufsteuerung verbunden sind.

39. Befestigungsvorrichtung nach Anspruch 38, wobei diese eine Auslösetaste aufweist, die mit der Steuereinrichtung verbunden ist.

40. Befestigungsvorrichtung nach Anspruch 39, wobei diese eine Sicherheitseinrichtung aufweist, durch die eine Betätigung der Arbeitseinheit nur dann freigegeben wird, wenn die Sicherheitseinrichtung einen vorgegebenen Schaltzustand eingenommen hat.

## Revendications

1. Dispositif de fixation (1) destiné à appliquer des éléments de fixation (2) à une structure, le dispositif de fixation (1) comprenant :
un chargeur (3) destiné à recevoir un nombre prédéterminé d'éléments de fixation (2) reliés en bande ;
une unité de travail à fonctionnement automatique dotée d'un outil qui effectue un mouvement de va-et-vient rectiligne et au moyen duquel un élément de fixation (2) peut être appliqué à la structure depuis une position de montage prédéterminé (14);
un ensemble d'actionnement destiné à actionner l'unité de travail ; et
un ensemble de transport destiné à transporter chaque élément de fixation (2) pour l'amener dans la position de montage (14) et comprenant un ensemble d'actionnement destiné à faire pivoter séquentiellement une unité d'avancement (54) autour d'un axe (57) perpendiculaire à la direction du mouvement de l'outil, unité d'avancement (54) comportant, sur une circonférence d'un cercle (60), imaginaire des saillies (59a, 59b, 59c et 59d) qui s'étendent sensiblement parallèlement à l'axe 57 ;
**caractérisé en ce que** l'ensemble de transport comprend :
un élément porteur (27) qui effectue un mouvement de va-et-vient rectiligne dans un plan situé sensiblement perpendiculairement aux saillies (59a, 59b, 59c et 59d) ;
un élément d'avancement (28) qui est relié à l'élément porteur (27) et qui comprend un crochet (29) présentant une face d'extrémité (30), destinée à reposer sur une saillie (59a, 59b, 59c et 59d) lorsque l'élément d'avancement (28) pousse la saillie (59a, 59b, 59c et 59d) en avant, et une face de glissement (31) précédant la face d'extrémité (30) pour glisser au-dessous d'une saillie (59a, 59b, 59c et 59d) lorsque l'élément d'avancement (28) est déplacé vers la position de départ, l'élément d'avancement (28) étant pivotant en s'opposant à une force élastique autour d'un axe de pivotement (32) formé à distance du crochet (29) et s'étendant sensiblement perpendiculairement à l'axe (57) ; et
une unité d'actionnement reliée à l'élément porteur (27).

2. Unité de fixation selon la revendication 1, dans laquelle l'unité d'avancement (54) a sensiblement une forme de disque.

3. Dispositif de fixation selon l'une des revendications 1 ou 2, dans lequel les saillies (59a, 59b, 59c et 59d) ont une section circulaire.

4. Dispositif de fixation selon l'une des revendications 1 à 3, dans lequel les saillies (59a, 59b, 59c et 59d) sont disposées à égale distance les unes des autres.

5. Dispositif de fixation selon la revendication 4, dans laquelle toutes les saillies (59a, 59b, 59c et 59d) sont identiques

6. Dispositif de fixation selon l'une quelconque des revendications 1 à 5, dans lequel l'unité d'avancement (54) est formée en venue de matière avec les saillies (59a, 59b, 59c et 59d).

7. Dispositif de fixation selon la revendication 6, dans lequel l'unité d'avancement (54) conçu en venue de matière et dotée des saillies (59a, 59b, 59c et 59d) est fabriqué à partir d'une matière plastique.

8. Dispositif de fixation selon l'une quelconque des revendications 1 à 7 comprenant un boîtier, dans lequel un évidement (50), dans lequel l'élément porteur (27) est guidé à coulissement, est ménagé dans une partie de boîtier (48).

9. Dispositif de fixation selon la revendication 8, dans lequel la partie de boîtier (48) comporte une gorge sensiblement incurvée (51) dans laquelle s'engagent les saillies (59a, 59b, 59c et 59d), la gorge 51 s'ouvrant dans l'évidement (50).

10. Dispositif de fixation selon la revendication 9, dans lequel la gorge (51) a une section qui correspond sensiblement à une section intérieure des saillies (59a, 59b, 59c et 59d).

11. Dispositif de fixation selon l'une quelconque des revendications 1 à 10, dans lequel l'élément d'avancement (28) est pivotant en s'opposant à la force élastique d'un ressort de compression (38), de préférence un ressort de compression hélicoïdal.

12. Dispositif de fixation selon la revendication 11, dans lequel le ressort de compression (38) est disposé entre l'élément d'avancement (28) et l'élément porteur (27).

13. Dispositif de fixation selon la revendication 11, dans lequel le ressort de compression (38) est disposé au-dessous du crochet (30) de l'élément d'avancement (28).

14. Dispositif de fixation selon la revendication 13, dans lequel le ressort de compression (38) est disposé sensiblement parallèlement à l'extension longitudinale de l'élément d'avancement (28), et l'élément d'avancement (28) comporte une plaque qui est formée sensiblement perpendiculairement à son extension longitudinale et repose sur le ressort de compression (38).

15. Dispositif de fixation selon la revendication 14, dans lequel le ressort de compression (38) pénètre partiellement dans un perçage de réception (39) ménagé dans l'élément porteur (27).

16. Dispositif de fixation selon l'une quelconque des revendications 1 à 15, dans lequel l'élément porteur (27) comporte un élément de blocage avant (42b) qui est disposé de telle sorte qu'il s'engage, de préférence directement, en avant d'une saillie (59b), par référence à la direction de transport, dans une position de repos de l'élément porteur (27).

17. Dispositif de fixation selon l'une quelconque des revendications 1 à 16, dans lequel l'élément porteur (27) comporte un élément de blocage arrière (42a) qui est disposé de telle sorte qu'il s'engage, de préférence directement, en arrière d'une saillie, par référence à la direction de transport, au moins dans une position de repos de l'élément porteur (27).

18. Dispositif de fixation selon la revendication 17, dans lequel les éléments de blocage avant et arrière (42) sont formés en venue de matière avec l'élément porteur (27).

19. Dispositif de fixation selon l'une quelconque des revendications 1 à 18, dans lequel l'élément porteur (27) est fabriqué en matière plastique.

20. Dispositif de fixation selon l'une quelconque des revendications 1 à 19, dans lequel l'élément d'actionnement est une unité à cylindre et piston à fonctionnement pneumatique, de préférence avec rappel par ressort.

21. Dispositif de fixation selon l'une quelconque des revendications 1 à 20, dans lequel l'outil effectue un mouvement de va-et-vient rectiligne et le chargeur (3) s'étend sensiblement parallèlement à la direction de mouvement de l'outil.

22. Dispositif de fixation selon l'une quelconque des revendications 1 à 21, dans lequel le dispositif est conçu pour avoir la forme d'un pistolet.

23. Dispositif de fixation selon l'une quelconque des revendications 1 à 22, dans lequel le chargeur 3 reçoit un certain nombre d'éléments de fixation (2) correspondant au nombre d'éléments de fixation (2) à appliquer à la structure dans l'étape de traitement suivante.

24. Dispositif de fixation selon l'une quelconque des revendications 1 à 23, dans lequel le dispositif comporte un support de chargeur (19) auquel le chargeur (3) peut être relié de façon amovible.

25. Dispositif de fixation selon la revendication 24, dans lequel le chargeur (3) peut être relié de façon crabotée et/ou non crabotée au support de chargeur (19).

26. Dispositif de fixation selon l'une des revendications 24 ou 25, dans lequel la connexion est une connexion par crochet.

27. Dispositif de fixation selon l'une quelconque des revendications 23 à 26, dans lequel le chargeur (3) comporte un conduit de réception ouvert à ses deux extrémités.

28. Dispositif de fixation selon l'une quelconque des revendications 23 à 27, dans lequel le chargeur (3) a une section sensiblement en forme de C.

29. Dispositif de fixation selon l'une des revendications 27 ou 28, dans lequel la région d'extrémité du conduit de réception, retirée en outre de la position de travail 14, comporte au moins une came de verrouillage.

30. Dispositif de fixation selon l'une quelconque des revendications 27 à 29, dans lequel la région d'extrémité du conduit de réception adjacent à la position de travail (14) comporte au moins une came de verrouillage.

31. Dispositif de fixation selon l'une quelconque des revendications 1 à 30, dans lequel l'ensemble (1) comporte au moins une butée (15) qui fixe la position d'un élément de fixation (2) dans la position de montage (14).

32. Dispositif de fixation selon l'une quelconque des revendications 23 à 31, lorsque annexée à la revendication 1, dans lequel l'ensemble de transport est actionnable manuellement.

33. Dispositif de fixation selon l'une quelconque des revendications 23 à 32, dans lequel le chargeur (3), en particulier le chargeur (3) et l'unité de transport, est pivotant autour d'un axe s'étendant sensiblement parallèlement à la direction de mouvement de l'outil.

34. Dispositif de fixation selon l'une des revendications 32 ou 33, dans lequel le chargeur (3) peut être pivoté sans à-coups avec ou sans le support de chargeur (19).

35. Dispositif de fixation selon l'une des revendications 33 ou 34, dans lequel l'angle de pivotement peut atteindre 250°.

36. Dispositif de fixation selon la revendication 32, dans lequel le chargeur (3) est pivotant avec le support de chargeur (19).

37. Dispositif de fixation selon l'une quelconque des revendications 1 à 36, dans lequel le transport de chaque élément de fixation (2) pour l'amener dans la position de montage (14) est effectué automatiquement et séquentiellement une fois que la position de montage (14) a été libérée.

38. Dispositif de fixation selon l'une quelconque des revendications 1 à 37, dans lequel l'ensemble de transport et l'ensemble d'actionnement sont reliés à un organe de commande en vue de la commande séquentielle.

39. Dispositif de fixation selon la revendication 38, dans lequel il est prévu une clavette d'arrêt qui est reliée à l'organe de commande.

40. Dispositif de fixation selon la revendication 39, dans lequel il est prévu un ensemble de sécurité au moyen duquel l'actionnement de l'unité de travail est libéré seulement lorsque l'ensemble de sécurité se trouve dans un état de commutation prédéterminé.
